Europäisches Patentamt

European Patent Office

Office européen des brevets

(19)

(11) Veröffentlichungsnummer : **0 094 579**
**B1**

(12) **EUROPÄISCHE PATENTSCHRIFT**

(45) Veröffentlichungstag der Patentschrift :
**06.05.87**

(21) Anmeldenummer : **83104521.6**

(22) Anmeldetag : **07.05.83**

(51) Int. Cl.⁴ : **F 16 K 17/10, G 05 D 16/00**

(54) **Vorgesteuertes Druckbegrenzungsventil für unter Druck stehende Fluidleitungen.**

(30) Priorität : **19.05.82 CH 3131/82**

(43) Veröffentlichungstag der Anmeldung :
**23.11.83 Patentblatt 83/47**

(45) Bekanntmachung des Hinweises auf die Patenterteilung : **06.05.87 Patentblatt 87/19**

(84) Benannte Vertragsstaaten :
**AT DE FR GB**

(56) Entgegenhaltungen :
**CH-A- 364 671**
**DE-A- 2 527 249**
**DE-B- 1 775 178**

(73) Patentinhaber : **Von Roll - Hydraulik A.G.**
**Von Roll-Strasse**
**CH-4701 Oensingen (CH)**

(72) Erfinder : **Meister, Erwin**
**Römerstrasse 502**
**CH-4702 Oensingen (CH)**

(74) Vertreter : **Meyer, Reinhard, Dipl.-Ing.**
**c/o Dr. A. R. Egli & Co. Patentanwälte Horneggstrasse**
**4**
**CH-8008 Zürich (CH)**

## Beschreibung

Die Erfindung betrifft ein vorgesteuertes Druckbegrenzungsventil für unter Druck stehende Leitungen, das einen mit einem Vorsteuer-Druckbegrenzungsventil in Wirkungsverbindung stehenden becherförmig ausgebildeten Hauptkolben aufweist und mit zwei Leitungsanschlüssen versehen ist, von denen bei geschlossenem Ventil der erste Leitungsanschluss an der Stirnseite und der zweite Leitungsanschluss am Umfang des Hauptkolbens endet, und von denen der erste Leitungsanschluss die Zulaufseite und der andere Leitungsanschluss die Ablaufseite bildet und je nach Höhe des Druckes sowohl der eine als auch der andere Leitungsanschluss die Zulaufseite oder die Ablaufseite bildet, wobei die Leitungsanschlüsse über ein Höchstdruck-Auswahlventil mit einem Raum auf der Gegenseite der Stirnseite des Hauptkolbens verbunden sind, an welchem Raum das Vorsteuer-Druckbegrenzungsventil angeschlossen ist.

Vorgesteuerte Druckbegrenzungsventile werden in grossem Umfang bei der Verteilung von unter Druck stehenden Fluiden überall dort verwendet, wo bei Ueberschreiten des eingestellten Druckes rasch verhältnismässig grosse Fluidmengen abgeleitet werden müssen. Sie bestehen im wesentlichen aus einem Hauptkolben und einem dem Hauptkolben zugeordneten Vorsteuerventil, das ein kleines, direkt wirkendes Druckbegrenzungsventil ist. Dieses öffnet sich bei Ueberschreiten des eingestellten Druckes, wodurch die eine Fläche des Hauptkolbens entlastet und durch den Fluiddruck der Hauptkolben in die Oeffnungsstellung bewegt wird.

Obwohl solche vorgesteuerten Druckbegrenzungsventile in grosser Zahl eingesetzt werden und auch bei entsprechender Wartung zuverlässig arbeiten, ist der Hauptkolben, insbesondere bei grossen Dimensionen, verhältnismässig schwer, so dass eine grosse Masse beim Oeffnen beschleunigt werden muss, was die Oeffnungszeit ungünstig beeinflusst.

Das Gewicht des Hauptkolbens lässt sich vermindern, wenn ein Druckbegrenzungsventil nach der Cartridge-Bauweise verwendet wird. Bei einem solchen Ventil ist der Hauptkolben hohl und becherförmig ausgebildet, wodurch eine wesentliche Verringerung der Masse des Hauptkolbens erreicht wird. Der Vorteil dieser Bauweise tritt vor allem dann auf, wenn dieses Ventil als einfachwirkendes Druckbegrenzungsventil eingesetzt wird. In diesem Fall ist die Zulaufseite, d. h. die Druckseite, durch den Boden des becherförmigen Hauptkolbens abgeschlossen. Beim einfachwirkenden Druckbegrenzungsventil kann diese Fläche so ausgebildet werden, dass sie nur um ein geringes kleiner ist als die Gesamtfläche des Hauptkolbens. Dies bedeutet, dass bei einer nur geringen Druckerniedrigung auf der dem Boden entgegengesetzten Seite des Hauptkolbens das Ventil sofort anspricht. Die kleinere Masse des Hauptkolbens einerseits und das geringere, zum Ansprechen des Hauptkolbens erforderliche Druckgefälle bewirkt, dass das Ansprechen des Ventils schneller erfolgt als bei einem massiven Kolben.

Müssen solche Ventile in der Cartridge-Bauweise in Fluidsystemen eingesetzt werden, in denen die Druckseiten wechseln, so dass an beiden Leitungsanschlüssen eines solchen Ventils der höhere Druck auftreten kann, muss, da ein solches Ventil nur eine Druckseite absichern kann, ein zweites Ventil für die andere Druckseite vorgesehen werden. Dies stellt einen verhältnismässig grossen Aufwand dar, weshalb Lösungen gesucht wurden, die Absicherung der beiden Druckseiten durch ein einziges Ventil zu erreichen. Bei einer solchen bekannten Ausführungsform (CH-A-364 671) weist der becherförmige Hauptkolben ausser seiner Bodenfläche, an die der eine Leitungsanschluss anschliesst, eine zweite ringförmige Fläche auf, die dem zweiten Leitungsanschluss zugeordnet ist. Da es sich um ein vorgesteuertes Ventil handelt, muss auch das Vorsteuerventil gesteuert werden, derart, dass es immer mit dem Leitungsanschluss in Verbindung steht, in dem der höhere Druck herrscht. Dies wird bei dem bekannten Ventil durch zwei im Hauptkolben angeordneten Rückschlagventile erreicht, von denen je eines mit einem der beiden Leitungsanschlüssen verbunden ist. Dadurch wird immer dasjenige Rückschlagventil, das am höheren Druck liegt, geöffnet und das andere geschlossen. Mit diesem Ventil wird zwar die vorstehend beschriebene Aufgabe, mit einem einzigen Ventil zwei Druckseiten abzusichern, erreicht, jedoch tritt nun der Nachteil auf, dass sowohl die Bodenfläche als auch die Ringfläche des Hauptkolbens kleiner ist als die Gesamtfläche des Kolbens. Werden beispielsweise die beiden Teilflächen gleichgross ausgelegt, bedeutet dies, dass die Gesamtfläche des Kolbens das Doppelte beträgt. Da jedoch das Ansprechen des Hauptkolbens immer nur durch den Druck auf einer der Teilflächen erfolgt, muss ein verhältnismässig grosses Druckgefälle vorliegen, bevor der Hauptkolben anspricht. Da zudem der Durchmesser des Hauptkolbens entsprechend den beiden Teilflächen grösser ist als für das einfach wirkende Ventil, wird die Masse des Kolbens spürbar vergrössert, wodurch eine weitere Verlangsamung des Oeffnungsvorganges eintritt.

Hier setzt die Erfindung ein, der die Aufgabe zugrundeliegt, ein Druckbegrenzungsventil der eingangs beschriebenen Art so auszugestalten, dass das rasche Ansprechen wie beim einfach wirkenden Ventil erhalten bleibt, obwohl das Ventil als doppelt wirkendes Ventil eingesetzt werden kann.

Zur Lösung dieser Aufgabe führt, dass der Hauptkolben auf der Gegenseite seiner Stirnseite mit einem zwei Ringflächen aufweisenden Ringkolben verbunden ist, der einen grösseren Aussendurchmesser als der Aussendurchmesser des Hauptkolbens aufweist, wobei die erste, am freien Ende des Ringkolbens liegende Ringfläche zusammen mit einem eine zylindrische Bohrung aufweisenden Gehäuseteil und einem in diese Bohrung hineinragenden Zapfen einen Ringraum bildet, während die der ersten Ringfläche gegenüberliegende zweite Ringfläche über eine Leitung mit dem zweiten Leitungsanschluss verbunden ist, wobei der Ringraum mit dem Höchstdruck-Auswahlventil und mit dem Vorsteuer-Druckbegrenzungsventil verbunden ist, und wobei der vom Hauptkolben und vom Zapfen gebildete Innenraum einen Niederdruckanschluss aufweist.

Dadurch, dass der Hauptkolben selbst unverändert bleibt und nur durch einen Ringkolben ergänzt wird, der zudem sehr kurz gehalten werden kann, da die Führung vom Hauptkolben übernommen wird, wird erreicht, dass unabhängig davon, an welchem der beiden Leitungsanschlüsse der höhere Druck herrscht, die jeweilige Druckfläche des Leitungsanschlusses und die dem Vorsteuerventil zugewandte Fläche des Hauptkolbens annähernd gleich gross sein können. Durch die mindestens annähernde Gleichheit der massgebenden Flächen am Hauptkolben und durch die nur geringfügige Vergrösserung der Masse des Hauptkolbens bleibt die Ansprechgeschwindigkeit eines solchen doppelt wirkenden Druckbegrenzungsventil mit derjenigen eines einfach wirkenden Ventils in Cartridge-Bauweise vergleichbar.

Die Erfindung ist in der Zeichnung in einem Ausführungsbeispiel dargestellt und nachfolgend beschrieben. Es zeigen :

Figur 1 einen Vertikalschnitt eines schematisch dargestellten Ventils in Cartridge-Bauweise und

Figur 2 einen Vertikalschnitt eines doppeltwirkenden, vorgesteuerten Druckbegrenzungsventils mit in Schaltsymbolen dargestellten Vorsteuerventil, Wechselventil und Umsteuerventil.

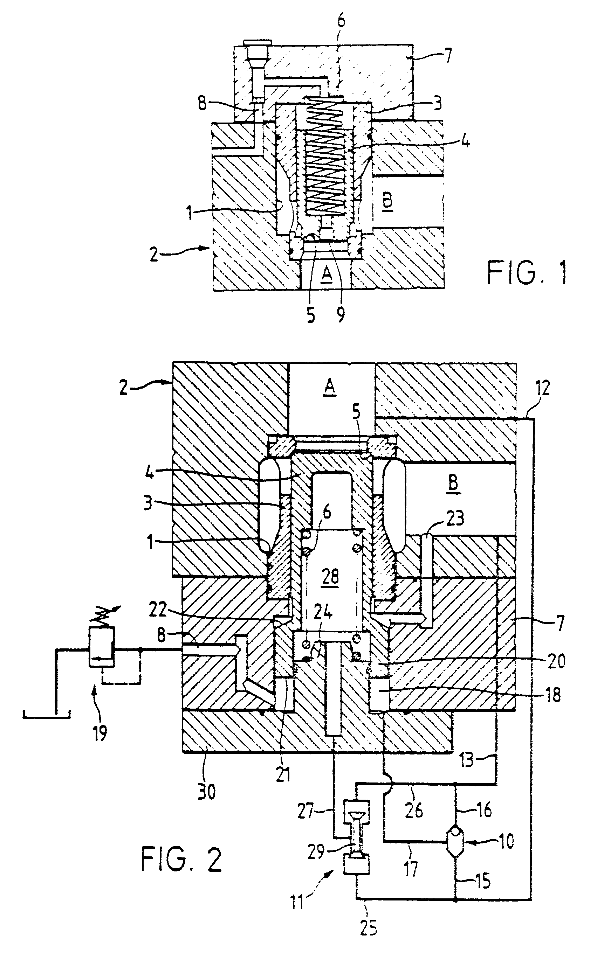

In Fig. 1 ist ein einfachwirkendes Ventil in Cartridge-Bauweise dargestellt. Es ist als 2-Weg-Einbauventil mit den beiden Leitungsanschlüssen A, B ausgebildet. Es setzt sich aus einer, in eine Bohrung 1 eines Gehäuses 2 eingesetzten Hülse, einem in der Hülse 3 verschiebbar geführten Ventilkolben 4 mit einem Ventilsitz 5 und einer Schliessfeder 6 zusammen. Die Bohrung 1 ist durch eine Deckplatte 7 abgeschlossen, in der eine Vorsteuerleitung 8 vorgesehen ist, die den Innenraum des Ventilkolbens 4 mit einem Vorsteuerventil oder einer andern Steuereinrichtung (nicht dargestellt) verbindet. Im Boden des Ventilkolbens 4 ist eine enge Bohrung 9 vorgesehen, die den Leitungsanschluss A mit dem Innenraum des Ventilkolbens 4 und damit mit dem Vorsteuerventil bzw. der Steuereinrichtung verbindet. Steigt der Druck im Leitungsanschluss A über den am Vorsteuerventil bzw. an der Steuereinrichtung eingestellten Druck öffnet es, so dass der Druck im Innern des Ventilkolbens 4 sinkt und der Kolben 4 öffnet. Die Schliessfeder 6 ist eine verhältnismässig schwache Feder, die den Oeffnungsvorgang praktisch nicht beeinflusst ; sie schliesst das Ventil bei fehlendem Druck.

Aus Fig. 1 ist ersichtlich, dass dieses Ventil nur bei einer Drucksteigerung im Leitungsanschluss A ansprechen kann. Der Leitungsanschluss B ist nicht mit der (nicht dargestellten) Vorsteuerung verbunden, so dass kein Ansprechen des Ventils in Abhängigkeit vom Druck im Leitungsanschluss B erfolgen kann. Wesentlich ist, dass beim Ventil nach Fig. 1 die Fläche des Ventilkolbens 4 am Leitungsanschluss A praktisch gleich gross ausgeführt werden kann wie der Durchmesser des Ventilkolbens 4 in der Hülse 3.

Im Druckbegrenzungsventil nach Fig. 2, das als doppelt wirkendes Ventil ausgebildet ist, bedeuten gleiche Bezugszeichen gleiche Teile. Es liegt eine weitgehende Uebereinstimmung mit dem Ventil nach Fig. 1 vor.

Damit das Ventil immer dann ansprechen kann, wenn in einem der beiden Leitungsanschlüsse A, B ein höherer Druck herrscht, ist ein Wechselventil 10 und ein Umsteuerventil 11 vorgesehen. Der Leitungsanschluss A ist über eine Leitung 12 und der Leitungsanschluss B über eine Leitung 13 mit dem Wechselventil 10 und dem Umsteuerventil 11 verbunden. Das Wechselventil 10 kann beispielsweise als Rückschlagventil mit zwei Zulaufleitungen 15, 16 und einer Ablaufleitung 17 ausgebildet sein. Das Wechselventil 10 ist in Fig. 2 für höheren Druck in der Zulaufleitung 15 dargestellt, wodurch die Ventilkugel gegen die Zulaufleitung 16 gedrückt wird und diese schliesst, so dass die Zulaufleitung 15 mit der Ablaufleitung 17 verbunden ist, die in einen ringzylindrischen Raum 18 mündet. Aus dem ringzylindrischen Raum 18 geht die Vorsteuerleitung 8 zu einem Vorsteuer-Druckbegrenzungsventil 19, das lediglich als Symbol dargestellt ist. Dieses Ventil kann beispielsweise als federbelasteter Ventilkegel ausgebildet sein, der auf einem Ventilsitz aufliegt und die Leitung 8 sperrt. Ueberschreitet der Druck einen bestimmten, durch die Feder definierten Druck, öffnet das Ventil, wodurch der Druck im ringzylindrischen Raum 18 abgesenkt wird, da die Verbindungsleitungen 12, 13 zu den Leitungsanschlüssen A, B in geeigneter Weise, z. B. durch eine Drossel (nicht dargestellt) gedrosselt sind.

Wesentlich ist, dass der becherförmig ausgebildete Ventilkolben 4 an seinem freien Ende mit einem Ringkolben 20 verbunden ist, der zwei Ringflächen 21, 22 bildet. Es kann der Innendurchmesser des Ringkolbens 20 gleich dem Aussendurchmesser des Ventilkolbens 4 und die Fläche der Ringflächen 21, 22 gleich gross sein. Die Ringfläche 22 ist über eine Leitung 23 mit dem Leitungsanschluss B direkt verbunden.

Die Deckplatte 7 ist durch einen Deckel 30 abgeschlossen, der einen vorspringenden Zapfen 24 aufweist, der die Innenwandung des ringzylindrischen Raums 18 für den Ringkolben 20 bildet.

Das Umsteuerventil 11 weist zwei Zulaufleitungen 25, 26 und eine Ablaufleitung 27 auf, die mit dem Innenraum 28 des Ventilkolbens 4 verbunden ist. Die Funktion des Umsteuerventils ist entgegengesetzt derjenigen des Wechselventils 10, da der jeweilig höhere Druck in einer der beiden Zulaufleitungen 25, 26 den Doppelventilkörper derart steuert, dass die Zulaufleitung mit dem kleineren Druck mit der Ablaufleitung 27 verbunden wird. Dies bedeutet, dass der Innenraum 28 immer mit demjenigen der beiden Leitungsanschlüsse A, B verbunden ist, in dem der kleinere Druck herrscht, der entweder gleich dem Atmosphärendruck ist oder einige Bar über diesem liegt. Andererseits ist der ringzylindrische Raum 18 wegen der Funktion des Wechselventils 10 immer mit demjenigen der beiden Leitungsanschlüsse A, B verbunden, in dem der höhere Druck herrscht.

Weist der Leitungsanschluss A den höheren Druck auf, wird das Wechselventil 10 in die in Fig. 2 dargestellte Lage gebracht, so dass eine Verbindung zwischen der Zulaufleitung 15 und der Ablaufleitung 17 und damit mit dem ringzylindrische Raum 18 besteht. Steigt nun im Leitungsanschluss A der Druck über den im Vorsteuer-Druckbegrenzungsventil 19 eingestellten Druck, öffnet sich dieses und bewirkt das Oeffnen des Ventilkolbens 4, wobei das Druckfluid nach dem Leitungsanschluss B fliesst. Herrscht im Leitungsanschluss B der grössere Druck, schliesst das Wechselventil 10 die Zulaufleitung 15 und verbindet die Zulaufleitung 16 mit der Ablaufleitung 17 und mit dem ringzylindrischen Raum 18. Gleichzeitig wird der Doppelventilkörper 29 im Umsteuerventil 11 in die entgegengesetzte Lage wie in Fig. 2 gebracht, d. h. die Zulaufleitung 26 wird gesperrt und die den niederen Druck aufweisende Zulaufleitung 25 mit der Ablaufleitung 27 und mit dem Innenraum 28 des Ventilkolbens 4 verbunden.

Der Ringkolben 20 stellt nur eine geringe Vergrösserung der Masse des Ventilkolbens 4 dar, da seine Bauhöhe nicht wesentlich grösser als der Hub des Ventilkolbens 4 zu sein braucht. Zudem ist es ohne Schwierigkeit möglich, die Bodenfläche des gegen den Leitungsanschluss A gerichteten Ventilkolbens 4 gleich gross auszuführen wie die beiden Ringflächen 21, 22, wodurch eine hohe Ansprechempfindlichkeit erreicht wird.

Das Ventil nach Fig. 2 wurde in der Ausführung als doppelt wirkendes Druckbegrenzungsventil beschrieben. Mit einem solchen Ventil ist es möglich, zwei Druckseiten, z. B. eines hydrostatischen Kreislaufes, gleichwertig abzusichern, d. h. auf denselben Druck zu begrenzen. Hierbei erfolgt der Durchfluss entweder vom Leitungsanschluss A nach dem Leitungsanschluss B oder umgekehrt. Wird an dem beschriebenen Ventil das Vorsteuer-Druckbegrenzungsventil 19 durch ein manuell oder selbsttätig schaltendes Bypass-Ventil ersetzt, kann das Ventil als Leerlaufventil verwendet werden, das die beiden Leitungsanschlüsse A, B annähernd drucklos miteinander verbindet. Dadurch, dass der Innenraum 28 des Hauptkolbens über das Umsteuerventil 11 jeweils mit dem Leitungsanschluss mit dem niedrigeren Druck verbunden wird, wird eine Leckleitung zur Ableitung von Leckfluid vermieden.

## Patentansprüche

1. Vorgesteuertes Druckbegrenzungsventil für unter Druck stehende Leitungen, das einen mit einem Vorsteuer-Druckbegrenzungsventil (19) in Wirkungsverbindung stehenden becherförmig ausgebildeten Hauptkolben (4) aufweist und mit zwei Leitungsanschlüssen (A, B) versehen ist, von denen bei geschlossenem Ventil der erste Leitungsanschluss (A) an der Stirnseite und der zweite Leitungsanschluss (B) am Umfang des Hauptkolbens endet, und von denen der erste Leitungsanschluss (A) die Zulaufseite und der andere Leitungsanschluss (B) die Ablaufseite bildet und je nach Höhe des Druckes sowohl der eine als auch der andere Leitungsanschluss (A, B) die Zulaufseite oder die Ablaufseite bildet, wobei beide Leitungsanschlüsse (A, B) über ein Höchstdruck-Auswahlventil (10) mit einem Raum (18, 28) auf der Gegenseite der Stirnseite des Hauptkolbens (4) verbunden sind, an welchem Raum das Vorsteuer-Druckbegrenzungsventil (19) angeschlossen ist, dadurch gekennzeichnet, dass der Hauptkolben (4) auf der Gegenseite seiner Stirnseite mit einem zwei Ringflächen (21, 22) aufweisenden Ringkolben (20) verbunden ist, der einen grösseren Aussendurchmesser als der Aussendurchmesser des Hauptkolbens aufweist, wobei die erste, am freien Ende des Ringkolbens liegende Ringfläche (21) zusammen mit einem eine zylindrische Bohrung aufweisenden Gehäuseteil (7) und einem in diese Bohrung hineinragenden Zapfen (24) einen Ringraum (18) bildet, während die der ersten Ringfläche gegenüberliegende zweite Ringfläche (22) über eine Leitung (23) mit dem zweiten Leitungsanschluss (B) verbunden ist, wobei der Ringraum (18) mit dem Höchstdruck-Auswahlventil (10) und mit dem Vorsteuer-Druckbegrenzungsventil (19) verbunden ist, und wobei der vom Hauptkolben (4) und vom Zapfen (24) gebildete Innenraum (28) einen Niederdruckanschluss aufweist.

2. Druckbegrenzungsventil nach Anspruch 1, dadurch gekennzeichnet, dass die am freien Ende des Ringkolbens (20) liegende erste Ringfläche (21) mit denjenigen der Leitungsanschlüsse (A, B) verbunden ist, in welchem der höhere Druck herrscht.

3. Druckbegrenzungsventil nach Anspruch 1 oder 2, dadurch gekennzeichnet, dass das Höchstdruck-Auswahlventil als Wechselventil (10) ausgebildet ist.

4. Druckbegrenzungsventil nach einem der Ansprüche 1 bis 3, dadurch gekennzeichnet, dass der Hauptkolben (4) einen Innenraum (28) aufweist, der über ein Umsteuerventil (11) mit demjenigen Leitungsanschluss (A, B) verbunden ist, in welchem der niedrigere Druck herrscht.

5. Druckbegrenzungsventil nach einem der Ansprüche 1 bis 4, dadurch gekennzeichnet, dass die stirnseitige, vom ersten Leitungsanschluss (A) begrenzte Fläche des Hauptkolbens (4) und die Ringflächen (21, 22) des Ringkolbens (20) gleiche oder annähernd gleiche Flächen aufweisen.

**Claims**

1. Pilot-operated pressure limitation valve for fluid circuits under pressure, which valve comprises a cup-shaped main piston (4), that in operation is connected with a servo pressure limitation valve (19) and is provided with two pipe connections (A, B), of which, when the valve is closed, the first (A) ends at the end face and the second connection (B) on the circumference of the main piston, and of which the first one (A) is the supply side and the other one (B) is the discharge side, and that, depending on the pressure, either the first or the second connection (A, B) serves as the supply or discharge side, both connections (A, B) being connected via a maximum pressure selection valve (10) with a space (18, 28) on the side opposite the end face of the main piston (4), with which space the servo valve (19) is connected, characterized in that the main piston (4) on the opposite side of the end face is connected with a ring piston (20) with two circular surfaces (21, 22), which piston has a larger outer diameter than the main piston (4), that the first circular surface (21) on the free end of the ring piston (20) together with a housing portion (7) having a cylindric bore and a plug (24), extending into the bore, define a ringshaped space (18), while the second circular surface (22), opposite the first surface (21), is connected with the second pipe connection (B) via a pipe (23), that the circular space (18) is connected with the maximum pressure selection valve (10) and the servo pressure limitation valve (19), and that the inner space (28) defined by main piston (4) and the plug (24) have a low pressure connection.

2. Valve according to claim 1, characterized in that the first circular surface (21) on the free end of the ring piston (20) is connected with the connection (A, B), which has the higher pressure.

3. Valve according to claim 1 or 2, characterized in that the maximum pressure selection valve is a two-way valve (10).

4. Valve according to one of the claims 1 through 3, characterized in that the main piston (4) has an inner space (28), that is connected via a reversing valve (11) with that one of the two pipe connections (A, B), in which the lowest pressure exists.

5. Valve according to one of the claims 1 through 4, characterized in that the end face of the main piston (4), as defined by the first pipe connection (A), and the circular surfaces (21, 22) of the ring piston (20) have equal or nearly equal areas.

**Revendications**

1. Dispositif de limitation de pression à soupape pilotée pour conduites sous pression comportant un piston principal (4) en forme de godet, en liaison active avec une soupape pilote de limitation de pression (19) et présentant deux branchements (A, B) dont, lorsque le limiteur est fermé, le premier (A) aboutit à la face frontale et le deuxième (B) sur le pourtour du piston principal, et dont le premier branchement (A) forme le côté admission et l'autre branchement (B) le côté évacuation, et selon l'importance de la pression, le premier, comme le deuxième branchement (A, B) forment le côté admission ou le côté évacuation, les deux branchements (A, B) étant reliés par une soupape de sélection de pression maximale (10) à un volume (18, 28) sur le côté opposé à la face frontale du piston principal.(4), la soupape pilote de limitation de pression (19) étant raccordée à ce volume, caractérisé en ce que le piston principal (4) est relié, sur le côté opposé à sa face frontale, à un piston annulaire (20) présentant deux surfaces annulaires (21, 22) et dont le diamètre extérieur est supérieur au diamètre extérieur du piston principal, la première surface annulaire (21), située à l'extrémité libre du piston annulaire, formant un volume annulaire (18) avec une partie de boîtier (7) présentant un perçage cylindrique et un tenon (24) pénétrant dans ce perçage, tandis que la deuxième surface annulaire (22), opposée à la première, est reliée par une conduite (23) au deuxième branchement (B), le volume annulaire (18) étant relié à la soupape de sélection de pression maximale (10) et à la soupape pilote de limitation de pression (19), et le volume intérieur (28), formé par le piston principal (4) et le tenon (24), présentant un branchement basse pression.

2. Dispositif de limitation de pression selon la revendication 1, caractérisé en ce que la première surface annulaire (21) située à l'extrémité libre du piston annulaire (20), est reliée à celui des branchements (A, B) dans lequel règne la plus forte pression.

3. Dispositif de limitation de pression selon la revendication 1 ou 2, caractérisé en ce que la soupape de sélection de pression maximale est un sélecteur (10).

4. Dispositif de limitation de pression selon l'une des revendications 1 à 3, caractérisé en ce que le piston principal (4) présente un volume intérieur (28) qui est relié, par un inverseur (11), au branchement (A, B) dans lequel règne la plus basse pression.

5. Dispositif de limitation de pression selon l'une des revendications 1 à 4, caractérisé en ce que la surface frontale du piston principal (4), limitée par le premier branchement (A) et les surfaces annulaires (21, 22) du piston annulaire (20) présentent des surfaces similaires ou approximativement similaires.

0 094 579

FIG. 1

FIG. 2

1